# EUROPEAN PATENT APPLICATION

(11) **EP 4 112 210 A1**
(43) Date of publication of application: **04.01.2023**
(21) Application number: 22175329.6
(22) Date of filing: 25.05.2022
(51) Int. Cl.: B23B 27/14, B23B 29/04, B23B 29/12, B23B 13/02, B23B 27/10, B23B 29/24

(54) **HOLDER AND CUTTING TOOL**

(30) Priority: 02.07.2021 JP 2021110691
(71) Applicant: Tungaloy Corporation, Iwaki-shi Fukushima 970-1144 (JP)
(72) Inventor: SHIMANUKI, Hiroki, Iwaki-shi, Fukushima, 9701144 (JP); SUZUKI, Yusuke, Iwaki-shi, Fukushima, 970-1144 (JP)
(74) Representative: Vossius & Partner Patentanwälte Rechtsanwälte mbB

(57) **Abstract**

Provided is a holder of a cutting insert that performs turning on a work by feeding a cutting edge in a Y axis direction which is different from a longitudinal direction (X axis) of a tool holder installed in a tool rest, and that can easily adjust the projection amount without contacting a part of the holder to the tool rest. A Y axis holder holds the cutting insert including a cutting edge to perform turning on a work that moves along the Z axis, and is installed in a state where relative movement in the X axis direction with respect to the tool rest is possible, such that a projection amount of the cutting insert along the X axis is changeable. The Y axis holder performs turning on the work using the cutting insert when the holder moves in the Y axis direction which is different from the X axis direction. The Y axis holder has a shape in which an end portion thereof in the X axis direction is projected from the cutting edge of the cutting insert, and a positioning portion to determine the projection amount of the cutting insert from the tool rest is disposed on the end portion.

## Description

### Background

### Field

The present invention relates to a holder and a cutting tool.

### Description of Related Art

In an automatic lathe that automatically performs turning operation, a long work is fed in the Z direction, while the cutting tool is moved along an axis vertical to the Z direction (an axis along the longitudinal direction of the holder, for example. This axis vertical to the Z axis is hereafter called "X axis" for explanatory convenience). As a result, the work is cut into a three-dimensional shape. An automatic lathe is not only used for this kind of operation, but is also used for feeding the cutting tool in a Y axis direction, which is vertical to both the Z axis and the X axis, and performing cutting processing, such as cutting off and grooving, on the work from the Y axis direction while interlocking the movement of the work in the Z axis direction and the movement of the cutting tool in the Y axis direction. (In the present invention, such an automatic lathe that is capable of processing in the Y axis direction is called a "Y axis direction cutting automatic lathe" for explanatory convenience.)

In the above mentioned Y axis direction automatic cutting lathe, not only standard cutting tools to place the cutting edge in the X axis direction but also cutting tools to place the corner edge of the tool in the Y axis direction and the holder thereof (in the present description, this cutting tool is called a "Y axis direction cutting tool" and the holder is called a "Y axis direction cutting holder" for explanatory convenience), can be selectively used (e.g. see Patent Publication JP2020-506074A and JP2004-148498A). In a case of an automatic lathe where a plurality of these cutting tools are disposed on a tool rest, and moved in the X axis direction and the Y axis direction so as to cut a work, it is not only critical that the origin alignment in the diameter direction is accurately performed (projection amount of the tool, that is, the distance from the tool rest to the cutting edge, is set at a predetermined amount), but it is also critical that the height of the cutting edge (core height) is accurately adjusted. Actually, in a standard turning tool, the height of the cutting edge (core height) may be adjusted in a state of placing a shim, for example.

### Summary

However, in the case of an automatic lathe, dispersion within a tolerance may be allowed in some cases, considering that the height (core height) is determined based on the manufacturing accuracy of the holder and the insert. As a consequence, adjustment of the height (core height) of the Y axis direction cutting holder is normally not performed in the Y axis direction automatic cutting lathe, and adjustment of the projection amount of the tool itself is not considered very much.

With the foregoing in view, it is an object of the present invention to provide a holder and a cutting tool that can be used for the Y axis direction automatic cutting lathe that performs turning on a work by feeding the cutting edge in the Y axis direction, which is different from the longitudinal direction (X axis) of the tool holder installed in the tool rest, so that the height (core height) of the cutting edge can be easily adjusted in the holder of the cutting insert.

An aspect of the present invention is a holder of a cutting insert, and the holder has a length along each direction of an X axis, Y axis and Z axis which are orthogonal to one another. The holder holds the cutting insert, including a cutting edge, to perform turning on a work that moves along the Z axis, and is installed in a state where relative movement in the X axis direction with respect to a tool rest is possible, such that a projection amount of the cutting insert along the X axis is changeable. The holder performs turning on the work using the cutting insert when the holder moves in the Y axis direction which is different from the X axis direction. The holder has a shape in which an end portion thereof in the X axis direction is projected from the cutting edge of the cutting insert, and a positioning portion, to determine the projection amount of the cutting insert from the tool rest, is disposed on the end portion.

According to the above aspect, the projection amount can be determined by adjusting the tool rest in the X axis direction while contacting a shaped portion, to be the reference of positioning the end face of the holder (positioning portion) to the work.

In the holder of the cutting insert according to the above aspect, the positioning portion may be disposed along the X axis direction at a position that is distant from the corner edge by a predetermined dimension.

In the holder of the cutting insert according to the above aspect, the end portion may have a shape, including a flat portion, having a side or a plane that is vertical to the X axis direction, and the positioning portion may be disposed on the flat portion.

In the holder of the cutting insert according to the above aspect, the end portion may have a shape, including an inclined portion, having a side or a plane that is inclined along the Z axis direction, and the positioning portion may be disposed on the inclined portion.

In the holder of the cutting insert according to the above aspect, the positioning portion may be disposed in the inclined portion at a location closest to the work.

In the holder of the cutting insert according to the above aspect, the end portion may have a shape, including a protruded portion, which is projected in the X axis direction, and the positioning portion may be disposed at the tip of the protruded portion.

In the holder of the cutting insert according to the above aspect, a stepped portion, which has a stepped shape to expand a region of the positioning portion along the Y axis, may be formed on the edge.

In the holder of the cutting insert according to the above aspect, an oil filler port may be disposed in the stepped portion.

In the holder of the cutting insert according to the above aspect, the positioning portion may be set such that the length from a Y axis direction reference plane of the holder, which performs turning on the work using the cutting insert when the holder moves in the X axis direction, to the corner edge position of the cutting insert, is included in the installation range of the positioning portion from the Y axis direction reference plane in the holder.

In the holder of the cutting insert according to the above aspect, a shank portion may have a straight shape.

In the holder of the cutting insert according to the above aspect, a limiting portion, which limits a possible width of the relative movement of the holder with respect to the tool rest in the X axis direction to a predetermined range, may not be disposed in the head portion or the shank portion.

In the holder of the cutting insert according to the above aspect, the head portion may be a replaceable type, where the head portion is replaceable and detachable from the shank portion.

Another aspect of the present invention is a cutting tool, including the above mentioned holder, and a cutting insert that is installed in the holder.

### Brief Description of Drawings

FIG. 1 is a perspective view depicting an external view when the cutting tool is placed on the tool rest;
FIG. 2A is a ZX plan view depicting an external view of a flat-shaped portion of the holder end face, along with the dimensional positions of the corner edge and the shaped portion on the end face;
FIG. 2B is a ZX plan view depicting an external view of an inclined-shaped portion of the holder end face, along with the dimensional positions of the corner edge and the shaped portion of the end face;
FIG. 2C is a ZX plan view depicting an external view of a protruded surface-shaped portion of the holder end face, along with the dimensional positions of the corner edge and the shaped portion of the end face;
FIG. 3A is an external view of the holder viewed in the Z axis direction, where a step is formed in the shaped-portion of the end face, so as to expand the portion used for positioning;
FIG. 3B is an external view of the holder viewed in the Z axis direction, where a step is not formed in the shaped-portion of the end face;
FIG. 4 is a ZX plan view depicting a configuration example of the vicinity of the oil filler port on the step side face of the holder;
FIG. 5 is a perspective view depicting a configuration example of the vicinity of the oil filler port on the step side face of the holder;
FIG. 6A is a diagram depicting a corner edge position of the cutting insert in the Y axis direction, in a normal holder (X axis holder), and FIG. 6B is a diagram depicting the corner edge position of the cutting insert in the Y axis direction, in the Y axis direction cutting holder (Y axis holder);
FIG. 7 is a schematic diagram depicting an example of the positional relationship between a plurality of holders having different shapes, and a work; and
FIG. 8 is a perspective view depicting a state of performing turning on a work, which is fed in the Z axis direction on an automatic lathe, by moving the cutting tool along the Z axis direction that is vertical to the work.

### Detailed Description

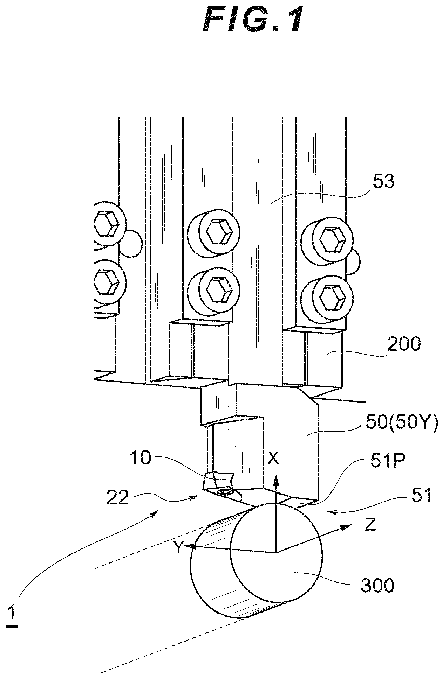

A preferred embodiment of a holder and a cutting tool according to the present invention will be described in detail with reference to the drawings (see FIG. 1 and the like). The cutting tool 1 is a tool that cuts a work 300 by feeding a cutting edge 20 of a cutting insert 10 when the work 300 is processed on an automatic lathe (not illustrated) or the like.

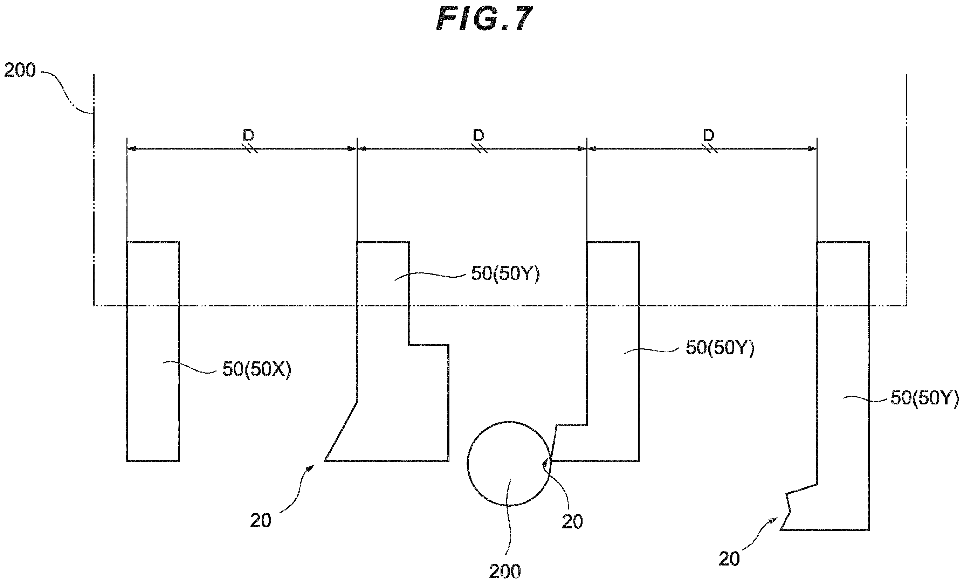

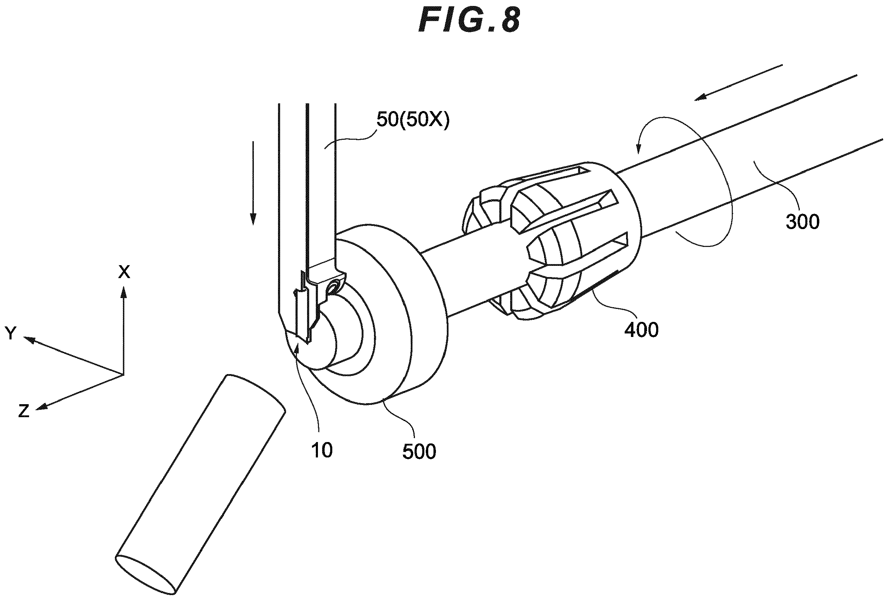

In the present embodiment, in a case where a "Y axis direction cutting holder" can be selectively used in addition to a commonly used standard holder, in a "Y axis direction cutting automatic lathe" (automatic lathe configured to allow processing in the Y axis direction), a preferred embodiment of this Y axis direction cutting holder will be primarily described. In other words, in an automatic lathe used for automatically performing a turning operation, it is common that while a long work 300 is being fed in the Z axis direction, turning is performed on the work 300 by moving a cutting tool 1 along an axis vertical to the Z axis direction (an axis along the longitudinal direction of the holder 50 in the present embodiment. This axis vertical to the Z axis is hereafter called "X axis" for explanatory convenience.), so as to cut out a three-dimensional shape (see FIG. 8). However, an automatic lathe which not only performs this operation but also allows feeding the cutting tool 1 in the Y axis direction, which is vertical to both the Z axis and the X axis, interlocking the movement of the cutting tool 1 in the Y axis direction with the movement of the work 300 in the Z axis direction, so that such cutting processing as cutting off and grooving can be performed on the work 300 in the Y axis direction, is also used. (In the present description, the automatic lathe configured to allow processing in the Y axis direction as well is called "Y axis direction cutting automatic lathe" for explanatory convenience.). In such a Y axis direction cutting automatic lathe, it is convenient if not only the cutting tool having a structure suitable for feeding the cutting tool in the X axis direction (that is, a tool in which the cutting insert and the holder are combined), but also a cutting tool 1 suitable for cutting in the Y axis direction (this is referred to as the "Y axis direction cutting tool" in the present description) can be selected and used when necessary. In the following, a holder suitable for the Y axis direction cutting tool 1 (hereafter called "Y axis direction cutting holder") will be described. The Y axis here is an axis vertical to both the X axis, which is along the longitudinal direction (normally the vertical direction) of the tool holder installed in a tool rest 200, and the Z axis, which is along the moving direction (normally the horizontal direction) of a long work (e.g. a bar) to be cut, and the Y axis is an axis extending in a direction in which a plurality of cutting tools 1 are disposed in a case of a commonly used "comb blade type" tool rest (see FIG. 1 and FIG. 7).

### Y Axis Direction Cutting Holder

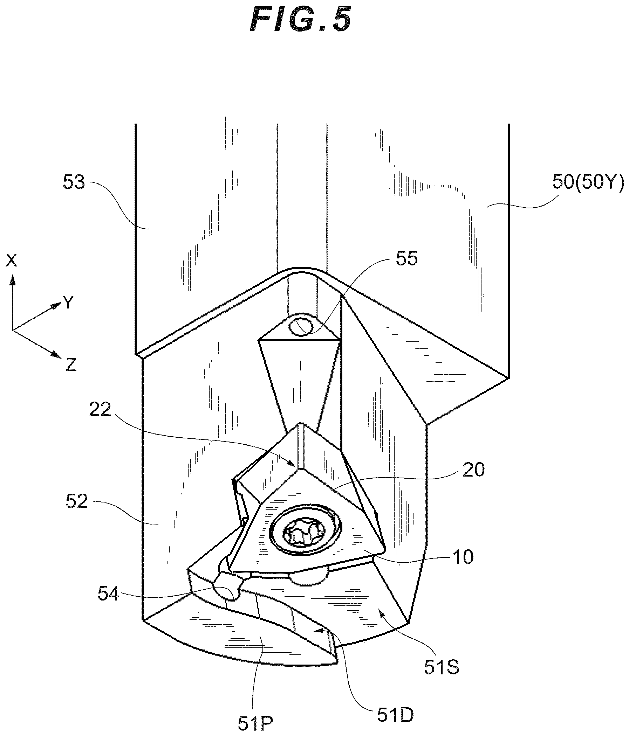

The holder 50 of the present embodiment holds the cutting insert 10, which performs turning on a work 300 supplied to the cutting insert 10 along a horizontal Z axis, for example (see FIG. 1). The holder 50 is positioned on a tool rest 200 such that the longitudinal direction thereof matches with the X axis in a vertical direction, which is vertical to the Z axis, for example. The Y axis direction cutting holder (also called "Y axis holder") 50 is configured to perform turning on the work 300 using the cutting insert 10 interlocking with the movement of the work 300, which moves in the Z axis direction, when the Y axis holder 50 moves along the horizontal Y axis which is vertical to both the X axis and the Z axis, for example (see FIG. 1). On the other hand, a holder that performs turning on the work 300 using the cutting insert 10 when the holder moves along the X axis (called "X axis holder" in the present description, for explanatory convenience, and is indicated by the reference sign 50X in FIG. 7 and the like), is configured to perform turning on the work 300 using the cutting insert 10 interlocking with the movement of the work 300 which moves in the Z axis direction when the X axis holder 50X moves along the X axis. On the tool rest 200, not only the Y axis holder (indicated by the reference sign 50Y in FIG. 7), but also the X axis holder 50X can be replaced and installed in accordance with the mode of turning. In the present embodiment, a plurality of types of holders 50 (X axis holder and Y axis holder) are disposed on the tool rest 200 along the Y axis direction in a "comb blade" shape, so that the tool rest 200 is moved in the X axis direction and the Y axis direction in accordance with the mode of turning, and the cutting insert 10 is appropriately selected, moved and replaced to perform a predetermined machining (see FIG. 7). The cutting tool 1 is configured to be a head replacement type tool, where the head portion 52 can be detachable from the shank portion 53 of the holder 50 (see FIG. 5 and the like).

### Positioning Portion of Y Axis Direction Cutting Holder

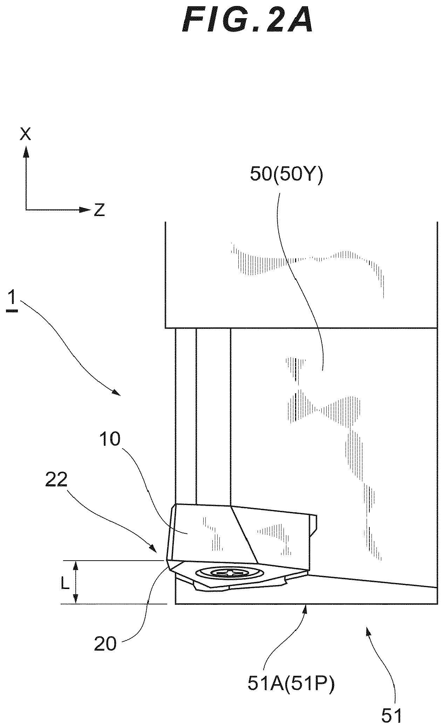

The Y axis direction cutting holder (Y axis holder) 50 has a shape where an end portion 51 in the X axis direction (lower end portion in the case of the present embodiment) protrudes downward from the cutting edge 20 of the cutting insert 10 (see FIG. 1). In the present embodiment, a positioning portion 51P, which becomes a positioning reference to determine the projection amount of the cutting insert 10 from the tool rest 200, is disposed on this end portion 51 (see FIG. 1 to FIG. 2C). When the cutting tool 1 (holder 50 and cutting insert 10) is installed in the tool rest 200 of the automatic lathe, the position of the tool rest 200 is adjusted in a state of contacting the positioning portion 51P of the holder 50 with the work 300, while considering the dimension between the corner edge 22 of the cutting edge 20 and the positioning portion 51P, whereby the projection amount can be set to a predetermined amount specified in advance. This positioning portion 51P is disposed at a position that is distant from the corner edge 22 (corner of the cutting edge 20) of the cutting insert 10 installed in the holder 50 by a predetermined dimension L (see FIG. 2A and the like).

### Mode of Positioning Portion of Holder

A mode of the end portion 51 of the holder 50 and the positioning portion 51P disposed on the end portion 51 is not especially limited. For example, the end portion 51 may have a flat shape that is parallel with the YZ plane (a shape including a flat portion 51A that includes a side or a plane vertical to the X axis), and the positioning portion 51P may be disposed on a part of or on an entire surface of the flat portion 51A (see FIG. 2A).

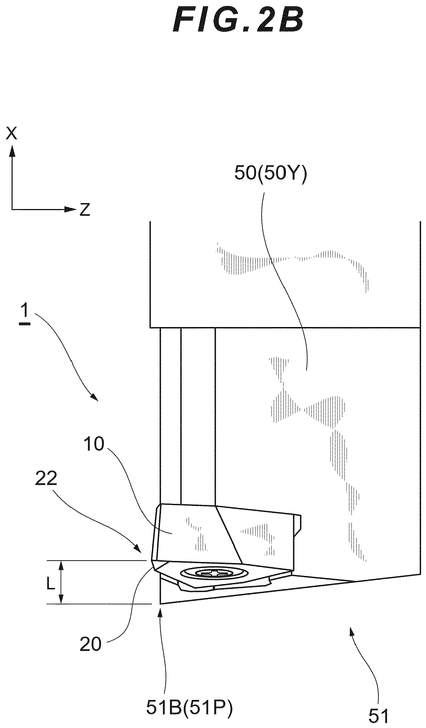

Another example is that the end portion 51 has a shape including an inclined portion 51B that includes a side or a plane inclined along the Z axis direction, and the positioning portion 51P is disposed on a part of the inclined portion 51B (see FIG. 2B). In this case, it is preferable that the inclined portion 51B has a flat shape that is inclined so that the plane ascends toward the cutting edge 20 side in the ZX plan view, and the positioning portion 51P is disposed at a location closest to the work in the inclined portion 51B. Disposing the positioning portion 51P at a location closer to the side of supplying the work 300 means disposing the positioning portion 51P at a location close to a guide bush 500 of the work 300, which allows to perform positioning more accurately by contacting the holder 50 with the work 300 that is not protruded from the chuck 400 or the guide bush 500 very much (see FIG. 8).

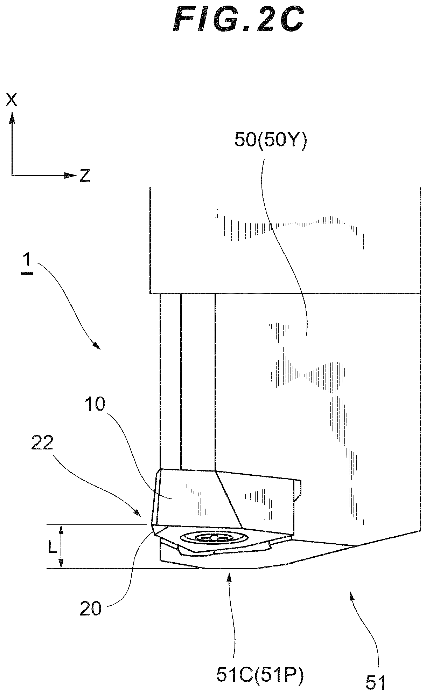

Another example is that the end portion 51 has a shape including a protruded portion 51C which is projected in the X axis direction in the ZX plan view, and the positioning portion 51P disposed at the tip of the protruded portion 51C (see FIG. 2C).

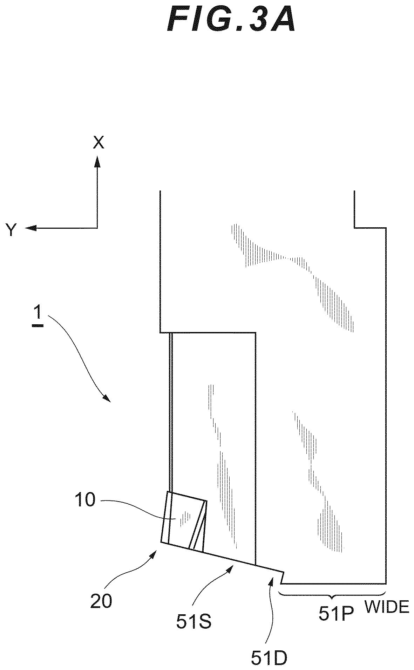

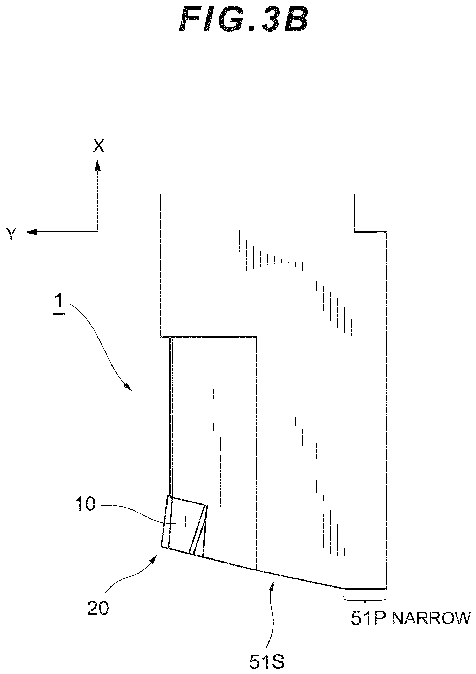

Further, a stepped portion 51D, which has a stepped shape to expand a region of the positioning portion 51P along the Y axis, may be formed on the end portion 51 of the holder 50 (see FIG. 3A). In the view in the Z axis direction (XY plan view), if the width of the inclined region on the end portion 51 (indicated by reference sign 51S in FIG. 3A and FIG. 3B) along the Y axis becomes wider, the width (length) of the positioning portion 51P along the Y axis decreases accordingly (see FIG. 3B). Therefore if the stepped portion 51D, directed to the tip side (downward), is formed in the middle of the inclined region 51S, the width of the positioning portion 51P along the Y axis can be increased without changing the dimension L from the corner edge 22 to the positioning portion 51P (See FIG. 3A). By widening the width of the positioning portion 51P along the Y axis using this shape, the work 300 and the positioning portion 51P of the holder 50 can be more easily contacted, and the positioning operation becomes easier.

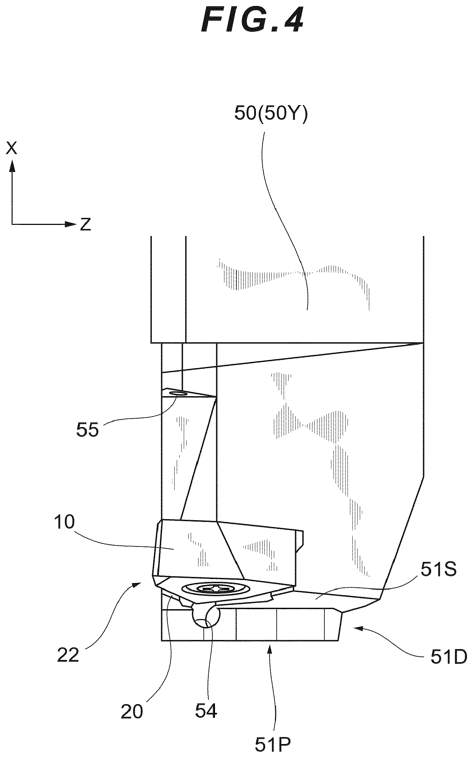

In the case of forming the above mentioned stepped portion 51D, an oil filler port 54 may be disposed in the stepped portion 51D (see FIG. 4 and

FIG. 5). By filling oil to the cutting insert 10 via the oil filler port 54 disposed in the stepped portion 51D, the cutting oil can be supplied from the side of the rake surface of the cutting insert 10. The reference sign 55 indicates another oil filler port through which the cutting oil is supplied to the cutting insert 10 from the opposite side of the rake surface (see FIG. 4 and FIG. 5).

### Disposition of Positioning Portion in Holder

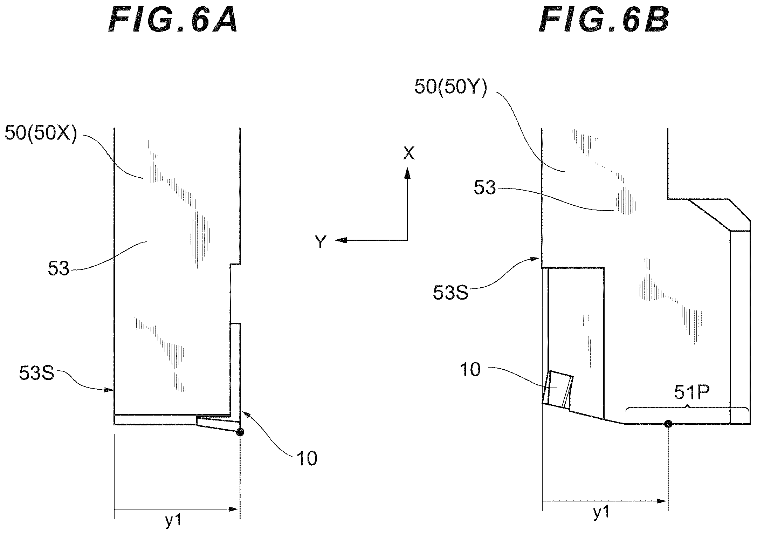

The positioning portion 51P in the Y axis direction cutting holder (Y axis holder) 50 is preferably set such that the Y axis direction coordinate position thereof corresponds to the Y axis direction coordinate position of the positioning portion 51P in the X axis holder 50. This will be described using concrete examples (see FIG. 6A and FIG. 6B). Among the side faces of the shank portion 53 of the X axis holder 50 (50X), the side face on the left side in the XY plan view indicated in FIG. 6A and FIG. 6B each is assumed to be the Y axis direction reference plane 53S, and the length in the Y axis direction from this Y axis direction reference plane 53S to the corner edge 22 of the cutting edge 20 (Y coordinates of which origin is the Y axis direction reference plane 53S) is assumed to be y1 (see FIG. 6A). In order to implement the Y axis holder 50 (50Y) that corresponds to such an X axis holder 50 (50X), the positioning portion 51P is set such that the Y axis direction length y1 in the X axis holder 50 (50X) is included in the installation range from the Y axis direction reference plane 53S of the positioning portion 51P in the Y axis holder 50 (50Y) (see FIG. 6B). In this case, the positioning operation of the Y axis holder 50 (50Y) becomes easier when the X axis holder 50 (50X) of the tool rest 200 is replaced with the Y axis holder 50 (50Y). In other words, in the case of positioning of the X axis holder 50 (50X), the positioning operation is performed in the state of contacting the corner edge 22 of the Y axis direction length y1 at the reference position with the work 300, but in the case of positioning of the Y axis holder 50 (50Y) after the replacement, the positioning portion 51P of which Y axis direction length y1 is included in the range, contacts with the work 300 merely by moving the Y axis holder 50 (50Y) in the Z axis direction, therefore there is no need to adjust the Y axis position of the tool rest 200 so that the positioning portion 51P contacts with the work 300. As a consequence, the Y axis holder 50 (50Y) can be installed in the same procedure as installing the X axis holder 50 (50X) while contacting the corner edge 22 with the work 300, (hence the corner edge 22 can be contacted with the work 300 at the same Y coordinate position based on the shank side face), or the adjustment program used for the X axis holder 50 (50X) can be used for the Y axis holder 50 (50Y) as well, which is convenient. If the positioning portion 51P is pointed, as illustrated in FIG. 2B and FIG. 2C, the range is point-shaped, and if the positioning portion 51P is a line, as illustrated in FIG. 2A and FIG. 6B, the range is linear in accordance with the width of the line.

### Types of Cutting Inserts

In the present embodiment, in a case where a part of the cutting insert 10 installed in the Y axis direction cutting holder (Y axis holder) 50 is projected from the corner edge of the cutting edge 20 in the X axis direction, the positioning portion 51P is disposed at a position where the cutting insert 10 is projected from the corner edge of the cutting edge 20 in the X axis direction, with respect to the tool rest 200, so that the projection amount can be adjusted while contacting the work 300 with the positioning portion 51P when the cutting tool (the cutting insert 10 and the holder 50) 1 is installed in the tool rest 200 of the automatic lathe. This is also true in the case where the cutting insert 10 of which rake angle does not become negative, and the projection amount can be adjusted by disposing the positioning portion 51P described above, in the case where the end portion 51 is projected from the corner edge 22 in the X axis direction with respect to the tool rest 200, even if the rake angle does not become negative, including the rake angle during the grooving, cutting off and screw cutting operations using the Y axis holder 50.

### Shapes of Shank Portion and Head Portion of Holder

In the Y axis holder 50 having the above mentioned mode, the structure of a conventional Y axis holder, such as a structure to determine the projection amount from the tool rest 200 by contacting a part of the holder with the tool rest 200, is not required. Therefore in the head portion 52 or the shank portion 53 of the Y axis holder 50 of the present embodiment, there is no need to dispose a limiting portion, to limit a possible width of the relative movement of the holder 50 with respect to the tool rest 200 in the X axis direction, to a predetermined range. Hence, the shank portion 53 may have a straight shape (may be a straight shank), and the adjacent width of the projection amount may be wider than the holder having the limiting portion in the head or the like. Further, if the shank portion 53 can have a straight shape, adjustment cutting tools (cutting insert 10 and holder 50) 1, which line up at equal intervals D, do not interfere with each other very much, hence the shapes and of tools are less restricted, and machining flexibility improves (see FIG. 7). Furthermore, the tools can be disposed at narrower intervals since adjacent tools are less likely to interfere with each other, and as a consequence, a number of tools installed in the tool rest 200 can also be increased.

The above embodiment is merely an example of a preferred embodiment of the present invention, and the present invention is not limited to this embodiment, but may be modified in various ways within a range not departing from the spirit of the invention. For example, in the present embodiment, the three directions orthogonal to one another are expressed using three axes: the X axis, Y axis and Z axis, and such phrases as the X axis holder and the Y axis holder are used accordingly, but these are merely for explanatory convenience. These expressions may be changed as required as long as an expression does not depart from the scope of the invention.

In the above mentioned embodiment, the holder 50 and the cutting tool 1 on the automatic lathe were described as examples, but the application range of the present invention is not limited to this, and the present invention may be applied not only to an automatic lathe, but to such a device as a turning center as well. In the case of a device in which the tool rest is also moved in the Z axis direction, such as in the case of the turning center, the holder 50 and the cutting tool 1 of the present invention can be applied with adding the operation for moving the tool rest in the Z axis direction.

The present invention can be suitably applied to a holder of a cutting insert for cutting processing (mainly for turning).

## Claims

1. A holder of a cutting insert, wherein
the holder is configured: to have a length along each direction of an X axis, a Y axis and a Z axis which are orthogonal to one another; to hold the cutting insert including a cutting edge to perform turning on a work that moves along the Z axis; to be installed in a state where relative movement in the X axis direction with respect to a tool rest is possible such that a projection amount of the cutting insert along the X axis is changeable; and to perform turning on the work using the cutting insert when the holder moves in the Y axis direction which is different from the X axis direction, wherein
the holder has a shape in which an end portion thereof in the X axis direction is projected from the cutting edge of the cutting insert, and
a positioning portion to determine a projection amount of the cutting insert from the tool rest is disposed on the end portion.

2. The holder of the cutting insert according to claim 1, wherein
the positioning portion is disposed along the X axis at a position that is distant from a corner edge of the cutting edge by a predetermined dimension.

3. The holder of the cutting insert according to claim 1 or 2, wherein
the end portion has a shape including a flat portion having a side or a plane that is vertical to the X axis direction, and the positioning portion is disposed on the flat portion.

4. The holder of the cutting insert according to claim 1, 2, or 3, wherein
the end portion has a shape including an inclined portion having a side or a plane that is inclined along the Z axis direction, and the positioning portion is disposed on the inclined portion.

5. The holder of the cutting insert according to any one of claims 1 to 4, wherein
the positioning portion is disposed in the inclined portion at a location closest to the work.

6. The holder of the cutting insert according to any one of claims 1 to 5, wherein
the end portion has a shape including a protruded portion which is projected in the X axis direction, and the positioning portion is disposed at the tip of the protruded portion.

7. The holder of the cutting insert according to any one of claims 1 to 6, wherein
a stepped portion, which has a stepped shape to expand a region of the positioning portion along the Y axis, is formed on the end portion.

8. The holder of the cutting insert according to claim 7, wherein
an oil filler port is disposed in the stepped portion.

9. The holder of the cutting insert according to any one of claims 1 to 8, wherein
the positioning portion is set such that the length from a Y axis direction reference plane of the holder, which performs turning on the work using the cutting insert when the holder moves in the X axis direction, to the corner edge position of the cutting insert, is included in the installation range of the positioning portion from the Y axis direction reference plane in the holder.

10. The holder of the cutting insert according to any one of claims 1 to 9, wherein
a shank portion has a straight shape.

11. The holder of the cutting insert according to any one of claims 1 to 10, wherein
a limiting portion, which limits a possible width of relative movement of the holder with respect to the tool rest in the X axis direction to a predetermined range, is not disposed in the head portion or the shank portion.

12. The holder of the cutting insert according to any one of claims 1 to 11, wherein
the head portion is a head replacement type, where the head portion is replaceable and detachable from the shank portion.

13. A cutting tool comprising:
the holder according to any one of claims 1 to 12; and
a cutting insert that is installed in the holder.
